# EUROPEAN PATENT APPLICATION

(11) **EP 4 484 106 A1**
(43) Date of publication of application: **01.01.2025**
(21) Application number: 23382671.8
(22) Date of filing: 29.06.2023
(51) Int. Cl.: B29B 17/00, B29B 17/04, B29B 7/66, B29B 9/02, B29B 9/14, B29K 105/08, B29L 31/08, B29L 31/30, B29B 7/38, B29B 7/88, B29B 7/90

(54) **METHOD OF OBTAINING PELLETS FROM COMPOSITE WASTE AND PELLETS OBTAINED**

(71) Applicant: Enfinity Iberia S.L.U, 28046 Madrid (ES)
(72) Inventor: SANZ CANTOS, MANUEL, 28046 Madrid (ES)
(74) Representative: Carlos Hernando, Borja

(57) **Abstract**

Method for obtaining pellets from composite material waste and pellets obtained. The disclosure relates to a method and system based on mechanical techniques that allow the structures of the composite material waste to be broken and to be able to reuse a first fibreglass-resin composite material in a formulation with at least one thermoplastic compound to obtain a secondary pellet-shaped raw material.

## Description

### OBJECT OF THE INVENTION

The present invention, method for obtaining pellets from composite material waste and pellets obtained, relates to a method and system based on mechanical techniques that allow the structures of the composite material waste to be broken and to be able to reuse a first fibreglass-resin composite material in a formulation with at least one thermoplastic compound to obtain a secondary pellet-shaped raw material.

The composite waste comprises at least a first fibre-resin composite material, in particular, reinforcement fibre embedded in a thermosetting resin matrix. The composite material waste may also comprise a foam, such that the first composite material and the foam form a composite material structure. Said foam acts as a filler core in the waste. The fibres of the first composite material that act as reinforcement fibres in the product from which the waste is derived and contained in the thermosetting resin matrix can be made of glass, carbon, Kevlar or other types of fibres of natural origin such as basalt, linen, hemp, among others. The foam that forms the core of the composite material structure can be, for example, PVC, polyurethane or balsa wood.

In that sense, the method of the present invention allows the recycling of waste with composite material structures, understood as waste with foam cores with a first composite material comprising fibres embedded in a thermosetting resin matrix, or the recycling of waste with monolithic structures, understood as waste without a foam core, in other words, with a first composite material comprising fibres embedded in a thermosetting resin matrix.

The present invention belongs to the sector of recycling waste from thermosetting composite materials, mainly waste derived from wind blades, ship hulls or aeronautical components among other waste from different industries, to obtain reusable secondary raw materials.

### BACKGROUND OF THE INVENTION

Composite materials are increasingly widely used by the industry. Sectors that traditionally used metals to manufacture their products, decide to replace them with composite materials since they bring many benefits such as weight reduction, better mechanical properties, better resistance to chemical agents, etc.

The global demand for composite materials is a growing demand. The total volume of the composite materials market in 2021 was 12 million metric tons and it is expected to reach a value of 15.5 million metric tons by the year 2026, value that can be exceeded due to the achievement of sustainable development objectives where certain sectors such as transport should increase the introduction of said materials in order to lighten vehicles and reduce fuel costs. In other sectors such as renewable energy, it is also possible that there will be significant increases in the consumption of composite materials due to the need for increasing renewable energy generation.

The increase in the demand for composite materials entails the problem of dealing with the management of a large amount of waste derived from said materials in a progressive manner. The main problem with these materials lies in the separation of their components where we usually find a monolithic material, with a reinforcement fibre embedded in a thermosetting polymeric matrix, additionally combined with filling materials or foams, by way of cores, forming composite material structures, which are used to increase thickness.

In that sense, composite materials can be mainly classified into two categories based on their structure: monolithic type structure and composite material structure or sandwich type structure. The first one presents a greater homogeneity of its materials, however, sandwich structures use materials with different mechanical/chemical properties such as, for example, PVC foams, polyurethane, polystyrene, wood, metals or metal or aramid honeycombs (honeycomb structures).

In addition to the mechanical separation of the above composite material structures, there are other methods to carry out the separation of materials such as pyrolysis and solvolysis. The main problem with both techniques lies in the high energy consumption and the generation of other waste products. The pyrolysis of composite materials occurs in ovens at temperatures above 1000 °C by burning fossil fuels, in turn generating other waste such as pyrolytic gases. In the case of solvolysis, other liquid waste fractions are obtained that currently do not have defined applications.

Traditionally, all composite material recycling processes have focussed on the elimination of the polymer matrices that coat the fibres. The process object of the present invention does not pursue the elimination of the polymeric matrix, although during the process same can be gradually degraded and disappear. Specifically, the method or process of the present invention consists of separating the components of the composite materials by means of mechanical processes prior to obtaining the pellets.

### DESCRIPTION OF THE INVENTION

The first object of the invention is a method according to claim 1. The method allows obtaining pellets, as secondary raw material, as a result of recycling waste from composite materials. Said waste can be derived from a first composite material with fibre and thermosetting resin, both in monolithic structure and in composite material structure, usually a sandwich-type structure with a first composite material like the previous one and a core. The reinforcement fibre of the first material can be carbon fibre or fibreglass or fibre of natural origin, among others. The core or foam material can be polyurethane or PVC or balsa wood or aluminium, among others.

In particular, the method for obtaining pellets from composite material waste with at least one first fibre-resin composite material comprises the following steps:
a) At least one first ripping of the waste,
b) At least one shredding of the waste, and
c) At least one first sieving of the shredded waste, separating said material into at least two fractions of different sizes, and
d) At least one micronising of the larger size fraction to obtain the first micronised composite material.

Micronising involves homogenising the size of the fibres obtained after sieving the first composite material to a particular size. The smallest fraction obtained after sieving is added to the result of the micronised fraction.

The first composite material has a resin ratio of between 40 % and 60% by weight and a fibre ratio of between 40 % and 60% by weight.

Optionally, immediately after the first ripping and before any other step, a second mechanical ripping of the waste occurs.

Mechanical techniques are chosen due to their good relationship between the energy consumed and the amount of waste processed.

If the waste is a composite material structure, such that together with the first composite material that presents a monolithic structure, incorporates a core or foam, after the first and/or second mechanical ripping, the torn waste is subjected to a densimetric separation so that, according to the different densities, the core or foam of the monolithic structure or first composite material with fibre and resin is separated. This densimetric separation is carried out before shredding the waste.

After densimetric separation, the waste of the core or foam is separated from the first composite material for recycling by other means and recycling of the first composite material is continued which is subjected to shredding.

Accordingly, the method begins with a first ripping, or primary ripping, to break the main structure of the waste, obtaining a mixed fraction of the first fibre-resin composite material and cores or foams adhered thereto in the event that the waste was a sandwich-type structure or composite material structure. Otherwise, the waste would only comprise the first composite material. Subsequently, at least a second ripping, or secondary ripping, is performed, whereby the previous waste is separated into a smaller size fraction than the previous one.

As mentioned, if this smaller waste comprises foam or core material in addition to the first composite material, same passes through a separation table by densities, densimetric separation step, thus obtaining two independent fractions, one with the first fibre-resin composite material, and another with the material of the core or foam. As mentioned the core or foam fraction is discarded from subsequent steps.

In that sense, the first fibre-resin composite material, passes to the shredding or grinding step to subsequently passing to a sieving step that discriminates based on the size of the ground waste. At this step of shredding or grinding, the first composite material passes directly from the second ripping in the event that the waste does not present a core or foam.

The fractions of the first composite material obtained will be homogenised in the micronising or micronisation process and finally the first composite material obtained will be used in the reformulation step to subsequently obtain the thermoplastic pellets.

In other words, after shredding or grinding, the aforementioned sieving of the first composite material is carried out and after the micronising of the smaller fraction derived from the sieving, same is subjected to a reformulation step by mixing said fraction of the first composite material with at least one thermoplastic polymer, thus obtaining a second composite material. This second composite material preferably presents in a powdery state.

The smaller size micronised fraction of the first composite material has a resin ratio between 40 and 60% by weight and a fibre ratio between 40% and 60% by weight, very similar to the ratio of the original waste prior to the beginning of the waste recycling method to obtain the pellets. A thermoplastic polymer or composite should be understood as a plastic material which, at a given temperature, has the ability to be moulded and melted more than once, such as, for example, PVC or polyethylene, among others. Likewise, depending on the formulation of the thermoplastic polymer to be mixed with the first composite material, different secondary composite materials will be obtained.

The second material is subjected to pelletising to obtain the pellets. This pellet can be subsequently used in different industries depending on the characteristics of the fibre and resin of the composite material from the recycled component waste.

The pellet, obtained according to the previous method, comprises:
- Between 50% and 80% by weight of at least one thermoplastic polymer,
- At least between 15% and 45% by weight of a micronised fibre-resin composite material waste, and
- Between 0% and 5% by weight of at least one additive.

### DESCRIPTION OF THE DRAWINGS

To complete the description of the present invention and facilitate the understanding of the features therein, Figure number 1 is included showing a detailed block diagram of the method object of the invention.

### PREFERRED EMBODIMENT OF THE INVENTION

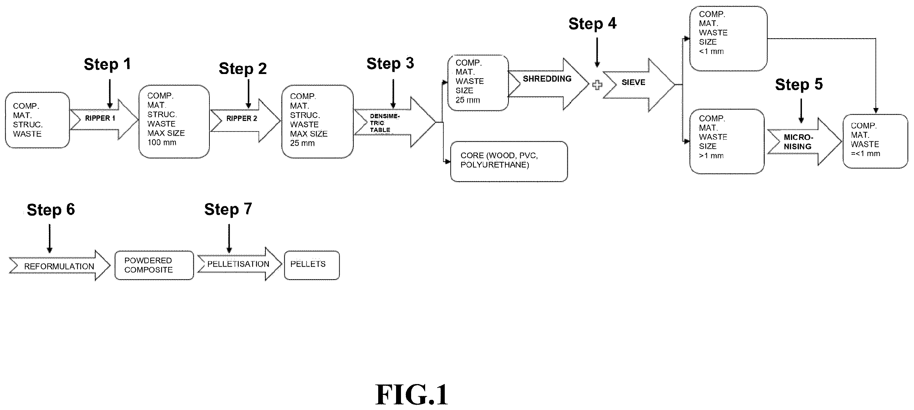

Next, a description of the method object of the invention is made with reference to Figure 1.

Step 1 of the process consists of a primary ripping, preferably with a double-spindle ripper that allows breaking the main structure of the waste to be processed. The resulting fraction may have attached core or foam particles if the waste comprises a sandwich structure or a composite structure made up of a monolithic fibre and resin structure together with a foam or core. If the waste only has a monolithic structure, same will not have materials associated with the foam or core. The resulting fraction from this first ripping is a waste with nominal maximum widths between 80 mm and 25 mm.

Step 2 of the process consists of a second ripping, or secondary ripping, with a single spindle ripper that facilitates the separation of the core or foam from the first fibre-resin composite material, if the waste comprises said foam or core. The resulting fraction from this process is a heterogeneous waste with a maximum size between 50 mm and 15 mm.

Step 3 of the process consists of a densimetric separation on a densimetric table. This step is only carried out if the waste has a sandwich-type structure, in other words, with foam or core and the first composite material. Thus, the resulting fractions from this step are a first fraction of the first fibre-resin composite material and a second core or foam fraction. The second fraction is stored for subsequent recycling.

Step 4 of the process consists of a shredding or grinding of the first fraction of the first composite material, followed by sieving or sieve filtering, preferably a vibrating one. Once the first composite material is shredded or ground and passes through the sieve, a fraction of the first composite material less than 1 mm and another discriminated fraction that is greater than 1 mm is obtained. The fraction of first composite material less than 1 mm is considered as valid and is separated for a subsequent step. The fraction greater than 1 mm passes to the next step of micronising or micronisation.

Step 5 of the process consists of a micronising or micronisation of the fraction greater than 1 mm, preferably by means of spray equipment. The resulting fraction from this micronising process is a homogenised fibre below 1 mm. The fraction of composite material smaller than 1 mm obtained after the previous sieving, in other words, those obtained after step 4, is added to this resulting fraction.

Step 6 consists of a chemical reformulation of the first composite material into particles smaller than 1mm by mixing same with a thermoplastic polymer or composite.

Lastly, step 7 consists of a pelletising of the chemical composite formulated in step 6, thus obtaining a thermoplastic pellet that can be used in common transformation processes such as injection, extrusion, pressing, 3d printing, etc., for different applications. The resulting pellet comprises:
- Between 50% and 80% by weight of at least one thermoplastic polymer,
- At least between 15% and 45% by weight of a micronised fibre-resin composite material waste, and
- Between 0% and 5% by weight of at least one additive.

## Claims

1. A method for obtaining pellets from composite material waste with at least a first fibre-resin composite material, **characterised in that** it at least comprises the following steps:
a) At least one first ripping of the waste,
b) At least one shredding of the waste,
c) At least one first sieving of the shredded waste, separating said material into at least two fractions of different sizes, and
d) At least one micronising of the larger size fraction to obtain the first micronised composite material.

2. The method according to claim 1, **characterised in that** the waste also comprises a foam material forming a composite material structure together with the first fibre-resin composite material.

3. The method according to claim 2, **characterised in that** after the ripping of the waste and before the shredding of the first composite material, a densimetric separation of the composite material structure into foam and into the first composite material is carried out.

4. The method according to claim 1, **characterised in that** the first micronised composite material is subjected to a reformulation step with at least one thermoplastic polymer to obtain a second composite material.

5. The method according to claim 4, **characterised in that** it comprises a step of pelletising the second composite material to obtain a pellet.

6. The method according to claim 1, **characterised in that** immediately after the first ripping and before any other step, a second ripping is produced.

7. The method according to claim 4, **characterised in that** the second composite material is powdery.

8. The method according to claim 1, **characterised in that** the first composite material has a resin ratio between 40 and 60% by weight and a fibre ratio between 40% and 60% by weight.

9. The method according to claim 1, **characterised in that** the smaller micronised fraction has a resin ratio between 40 and 60% by weight and a fibre ratio between 40% and 60% by weight.

10. The method according to claim 2, **characterised in that** the foam is preferably polyurethane or PVC or aluminium or balsa wood.

11. A pellet, obtained according to the method of claim 1, **characterised in that** it comprises:
- Between 50% and 80% by weight of at least one thermoplastic polymer,
- At least between 15% and 45% by weight of a micronised fibre-resin composite material waste, and
- Between 0% and 5% by weight of at least one additive.

12. The pellet, according to claim 11, **characterised in that** the fibre is preferably carbon fibre or fibreglass or fibre of natural origin, among others.

13. The pellet, according to claim 11, **characterised in that** the thermoplastic polymer is PVC or polyethylene, among others.
